# EUROPÄISCHE PATENTANMELDUNG

(11) **EP 1 431 119 A2**
(43) Veröffentlichungstag der Anmeldung: **23.06.2004**
(21) Anmeldenummer: 03026997.1
(22) Anmeldetag: 26.11.2003
(51) Int. Cl.: B60Q 1/26, B60Q 1/30, B60R 1/12, F21V 8/00, F21V 29/00, F21V 7/20, F21Y 101/02, F21W 101/12

(54) **Fahrzeugleuchte**

(30) Priorität: 16.12.2002 DE 20219483 U
(71) Anmelder: FER Fahrzeugelektrik GmbH, 99819 Eisenach (DE)
(72) Erfinder: Wimbert, Frank, Dr., 99817 Eisenach (DE); Gotthardt, Frank, Dr., 99817 Eisenach (DE); Quendt, Peer, Dr., 99817 Eisenach (DE); Bräutigam, Markus, 36433 Immelborn (DE)
(74) Vertreter: Strasser, Wolfgang, Dipl.-Phys.

(57) **Zusammenfassung**

Eine Fahrzeugleuchte, insbesondere für ein Kraftfahrzeug, umfaßt ein Gehäuse mit einer durch eine langgestreckte Lichtscheibe (6) verschlosenen Lichtaustrittsöffnung, wenigstens eine im Gehäuse seitlich von der Lichtscheibe angeordnete Leuchtdiode (15), deren Hauptabstrahlrichtung im wesentlichen parallel zur Längsrichtung der Lichtscheibe verläuft, eine Lichtleitvorrichtung (8), in die das von der wenigstens einen Leuchtdiode in Hauptabstrahlrichtung abgegebene Licht eingekoppelt und zumindest teilweise quer zu dieser Hauptabstrahlrichtung zur Lichtscheibe hin ausgekoppelt wird, und eine Reflektoranordnung (20), die sich zumindest auf der der Lichtscheibe gegenüberliegenden Seite der Lichtleitvorrichtung erstreckt und Licht, das von dieser in anderen Richtungen als zur Lichtscheibe hin ausgekoppelt wird, zur Lichtscheibe hin reflektiert. Zur Verringerung des bei längerer Betriebsdauer der wenigstens einen Leuchtdiode auftretenden Helligkeitsabfalls ist vorgesehen, daß die Reflektoranordnung ein gut Wärme leitendes Material umfaßt und mit der wenigstens einen Leuchtdiode in gut Wärme leitender Verbindung steht, um für sie als Kühlkörper zu wirken.

## Beschreibung

Die Erfindung betrifft eine Fahrzeugleuchte, insbesondere eine Kraftfahrzeug-Leuchte der im Oberbegriff von Anspruch 1 niedergelegten Art.

Eine solche Leuchte ist beispielsweise aus der EP 01 123 763.3 bekannt.

In dieser Druckschrift wird eine Kraftfahrzeug-Seitenblinkleuchte beschrieben, die in das Gehäuse eines Kraftfahrzeug-Außenspiegels eingebaut ist. Da die langgestreckte Lichtscheibe in ihrer Form an die Krümmung des Spiegelgehäuses angepaßt ist, ist es erforderlich, das Licht der neben einer der kurzen Stirnseiten der Lichtaustrittsöffnung angebrachten Leuchtdioden, deren Hauptabstrahlrichtung sich in etwa tangential zur Längsrichtung der Lichtscheibe erstreckt, auf einer entsprechend gekrümmten Bahn zu führen. Zu diesem Zweck sind Lichtleit-Stäbe vorgesehen, die sich hinter der Lichtscheibe parallel zu dieser und zu einander erstrecken und so gekrümmt sind, daß sie das in ihr eines Stirnende eingekoppelte Licht nahezu vollständig zu ihrem gegenüberliegenden Ende leiten und dort in einer zur Fahrtrichtung im wesentlichen schräg nach hinten verlaufenden Richtung abstrahlen. Zwischen diesen Lichtleit-Stäben und mit ihnen alternierend angeordnet befinden sich jeweils streifen- oder stabförmige Linsen, hinter denen jeweils eine Gruppe von Leuchtdioden angeordnet ist, deren in etwa in Fahrtrichtung abgestrahltes Licht von der zugehörigen Linse in vertikaler Richtung gesammelt und in einen vorgegebenen Winkelbereich gebündelt wird. Hinter den stabförmigen Lichtleitern ist eine in vertikaler Richtung durchgehende, bedampfte Reflektorblende angeordnet, die im Bereich der längs einer horizontalen Linie angeordneten Leuchtdioden Durchbrüche aufweist, durch welche die Leuchtdioden hindurch ragen. Dabei erweitert sich jeder Durchbruch von der zugehörigen Leuchtdiode stumpfkegeligen nach außen, um so jeweils einen kleinen Reflektors zu bilden. Auch die von den Lichtleit-Stäben nicht zum anderen Stirnende weiter geleiteten Anteile des eingekoppelten Lichts, die in einer nicht zur Lichtscheibe hin führenden Richtung aus den Lichtleit-Stäben austreten, werden von dieser Reflektoranordnung im wesentlichen zur Lichtscheibe hin reflektiert.

Ein Problem bei dieser bekannten sowie allen anderen Fahrzeugleuchten, bei denen Leuchtdioden als Lichtquelle verwendet werden, besteht darin, daß sich der von den Leuchtdioden abgegebene Lichtstrom mit steigender Erwärmung verringert. Andererseits wird für die Erfüllung der Leuchtfunktion möglichst viel Licht benötigt.

Somit liegt der Erfindung die Aufgabe zugrunde, eine Fahrzeugleuchte der eingangs genannten Art so weiterzubilden, daß der von der oder den Leuchtdioden abgegebene Lichtstrom auch bei längerer Leuchtdauer möglichst wenig abfällt.

Zur Lösung dieser Aufgabe sieht die Erfindung die im Anspruch 1 niedergelegten Merkmale vor.

Durch die erfindungsgemäßen Maßnahmen wird eine gute Kühlung der Leuchtdioden erzielt, die ein Ansteigen ihrer Temperatur auch dann verhindert und somit einen gleichbleibenden Lichtstrom sicherstellt, wenn die Leuchtdioden längere Zeit ohne Unterbrechung eingeschaltet bleiben. Ein besonderer Vorteil der erfindungsgemäßen Maßnahmen ist darin zu sehen, daß diese Kühlwirkung ohne die Verwendung zusätzlicher Bauelemente und somit ohne eine wesentliche Steigerung der Herstellungskosten erzielt werden kann.

Vorteilhafte Ausführungsformen und Weiterbildungen der erfindungsgemäßen Fahrzeugleuchte sind in den Unteransprüchen niedergelegt.

Die Erfindung wird im folgenden anhand von Ausführungsbeispielen unter Bezugnahme auf die Zeichnung beschrieben ; in dieser zeigen:
- Figur 1: eine schematisierte, perspektivische Rückansicht eines Kraftfahrzeug-Außenspiegels in seiner Anbauposition auf der Fahrerseite, in den eine gemäß der Erfindung ausgebildete Seitenblinkleuchte eingebaut ist,
- Figur 2: in vergrößertem Maßstab einen horizontalen Teil-Schnitt durch den Außenspiegel aus Figur 1 längs der Linie II-II und
- Figur 3: einen stark schematisierten (im eingebauten Zustand in einem Fahrzeug) horizontal verlaufenden Schnitt durch eine gemäß der Erfindung ausgestaltete, hochgesetzte Bremsleuchte.

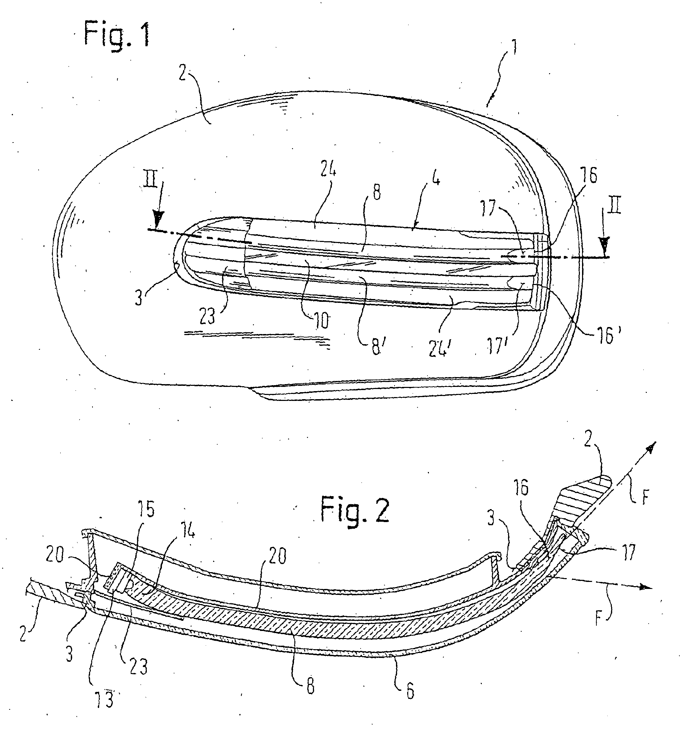

Figur 1 zeigt eine perspektivische, entgegen der Fahrtrichtung gesehene Ansicht eines Außenrückspiegels 1 für Kraftfahrzeuge, der eine Abdeckkappe 2 mit einer langgestreckten, im eingebauten Zustand im wesentlichen horizontal verlaufenden Lichtaustrittsöffnung 3 aufweist, in die von hinten eine gemäß der Erfindung ausgebildete Seitenblinkleuchte 4 eingebaut ist. Die in Figur 2 dargestellte, die Lichtaustrittsöffnung 3 verschließende, optisch nicht aktive Lichtscheibe 6 ist in Figur 1 der Deutlichkeit halber weggelassen.

Wie man der Figur 1 deutlich entnimmt, besitzt die Seitenblinkleuchte 4 eine streifenförmige Struktur. Diese kommt dadurch zustande, daß in vertikaler Richtung alternierend unterschiedliche, langgestreckte, in etwa horizontal verlaufende Bereiche vorgesehen sind, die von zwei als Lichtstäbe ausgebildeten Lichtleitern 8, 8' und einer dazwischenliegenden, streifen- oder stabförmigen Linse 10 gebildet werden. Hinter dieser Linse 10 ist eine Gruppe von Leuchtdioden (nicht dargestellt) auf einer Linie angeordnet, die sich in etwa parallel zur Linse 10 erstreckt. Das in etwa.in Fahrtrichtung abgestrahlte Licht dieser Leuchtdioden wird von der Linse 10 in vertikaler Richtung gesammelt und in einen vorgebbaren Winkelbereich gebündelt.

Wie man Figur 2 entnimmt, ist an dem einen, in der Figur linken Stirnende 14 eines jeden stabförmigen Lichtleiters 8, 8' eine weitere Leuchtdiode 15 so angeordnet, daß das von ihr abgegebene Licht in den stabförmigen Lichtleiter 8, 8' eingekoppelt und von diesem weitgehend zu seinem gegenüberliegenden Stirnende 16, 16' weitergeleitet wird. An diesem Stirnende 16, 16' ist jeder der stabförmigen Lichtleiter 8, 8' mit einer als Auskoppelfläche dienenden Abschrägung 17, 17' versehen, deren Neigung so gewählt ist, daß das durch sie hindurch austretende Licht in den gesetzlich vorgeschriebenen Raumwinkelbereich, das heißt im wesentlichen quer zur Fahrtrichtung und etwas schräg nach hinten abgestrahlt wird, wie dies durch die Pfeile F angedeutet ist.

Hinter den stabförmigen Lichtleitern 8, 8' ist eine in vertikaler Richtung durchgehende, metallisch bedampfte Reflektorblende 20 angeordnet, die eine hohe Wärmeleitfähigkeit besitzt und an ihrem in Figur 2 linken Ende so winkelig abgebogen ist, daß sie mit der die Leuchtdiode 15 tragenden Platine 13 in einem engen, gut Wärme leitenden Kontakt steht, wobei die Platine 13 ihrerseits einen guten Wärmeleitkontakt zur Leuchtdiode 15 aufweist. Auch die oben erwähnten, hinter der Linse 10 linear nebeneinander angeordneten Leuchtdioden weisen einen ähnlich guten Wärmeleitkontakt zur Reflektorblende 20 auf. Somit kann diese Reflektorblende als Kühlkörper für alle Leuchtdioden der erfindungsgemäß ausgebildeten Seitenblinkleuchte 4 dienen.

Eine weitere wesentliche Funktion dieser Reflektorblende 20 besteht darin, daß sie sämtliches Licht, das sowohl von den linear nebeneinander angeordneten Leuchtdioden als auch den Lichtleitern 8, 8' nicht zur Lichtscheibe 6 hin abgestrahlt wird, auffängt und so reflektiert, daß es durch die Lichtscheibe 6 hindurch austritt.

Auf der in der Figur 1 linken Seite sind die Enden der stabförmigen Lichtleiter 8, 8' und der Linse 10 sowie die oberhalb des oberen stabförmigen Lichtleiters 8 und unterhalb des unteren stabförmigen Lichtleiters 8' befindlichen, quer verlaufenden, streifenförmigen Bereiche 24, 24' durch eine Abdeckblende 23 überdeckt, die entweder metallisch bedampft oder vorzugsweise in der Farbe der Abdeckkappe 2 des Außenrückspiegels 1 lackiert sein kann, die vorzugsweise gleich der Farbe der Kraftfahrzeug-Karosserie ist.

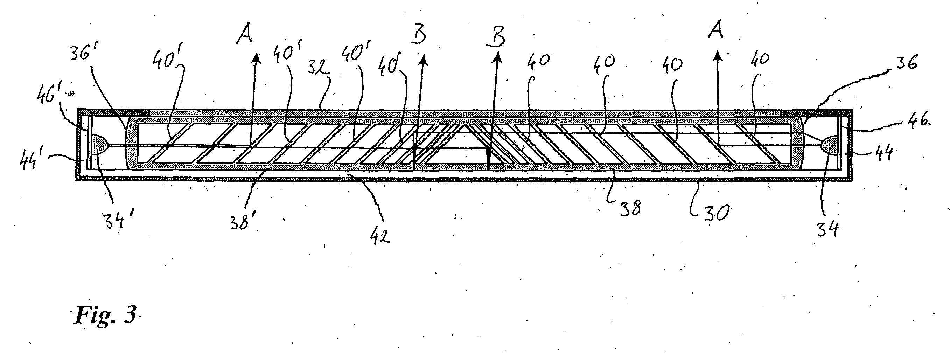

In Figur 3 ist ein in Einbaulage horizontal verlaufender Längsschnitt durch das langgestreckte Gehäuse 30 einer gemäß der Erfindung ausgebildeten, hochgesetzten Bremsleuchte dargestellt, das im wesentlichen kastenförmig ausgebildet und an seiner in der Figur oben liegenden Vorderseite durch eine Lichtscheibe 32 verschlossen ist.

Im Inneren des Gehäuses 30 ist an jeder der beiden schmalen Stirnseiten eine Leuchtdiode 34, 34' wiedergegeben, deren zunächst divergentes Lichtbündel durch eine Fresnel-Linse 36, 36' hindurch tritt und sich danach als in etwa paralleles Lichtbündel zur gegenüberliegenden Stirnseite hin ausbreitet.

Jedem der beiden parallelen Lichtbündel ist eine Lichtlenkvorrichtung 38, 38' zugeordnet, die eine Vielzahl von in etwa planparallelen Platten 40, 40' aus einem transparenten Material umfaßt, dessen Brechungsindex sich vom Brechungsindex der Luft unterscheidet, welche die zwischen den planparallelen Platten 40, 40' vorhandenen Zwischenräume erfüllt.

Die planparallelen Platten 40, 40' sind gegen die zentrale Achse des jeweiligen Lichtbündels unter einem Winkel von etwa 45° so geneigt, daß ein Teil des von der zugehörigen Leuchtdiode 34, 34' kommenden Lichts, das zunächst auf ihre vordere und dann auf ihre hintere Grenzfläche auftrift, zur Lichtscheibe 32 hin reflektiert wird und durch diese hindurch nach außen gelangt, wie dies durch die Pfeile A angedeutet ist. Der auf diese Weise ausgekoppelte Teil eines jeden Lichtbündels ist jeweils kleiner als der Anteil, der sich nach Durchtritt durch die betreffende planparallele Platte 40, 40' mit einem gewissen Parallelversatz nach hinten (d. h. von der Lichtscheibe 32 weg) weiterhin zur gegenüberliegenden Stirnseite hin ausbreitet.

Nach Erreichen der Mitte der Anordnung breitet sich jedes der beiden Lichtbündel durch die zum anderen Lichtbündel gehörende Lichtlenkvorrichtung 38, 38' weiter aus, deren planparallele Platten jedoch so geneigt sind, daß sie den nicht geradlinig durch sie hindurch gehenden Teil des Lichtbündels nicht nach vorne zur Lichtscheibe 32 sondern nach hinten reflektieren. Um diesen Teil nicht zu verlieren, erstreckt sich über die gesamte Länge des Bremsleuchten-Gehäuses eine Reflektoranordnung 42, welche die nach hinten ausgekoppelten Lichtanteile so reflektiert, daß sie nach Durchtritt durch die jeweilige planparallele Platte 40, 40' nach vorne zur Lichtscheibe 32 gelangen und durch diese hindurch austreten. Siehe insbesondere die Pfeile B!

Durch die an jeder der planparallelen Platten 40, 40' erfolgende Auskoppelung eines Teiles des parallelen Lichtbündels wird dieses zur Mitte der Anordnung hin schwächer und schwächer und in entsprechender Weise verringert sich auch die Intensität der ausgekoppelten Lichtbündel-Anteile. Um dennoch eine zumindest für das menschliche Auge gleichmäßig erscheinende Ausleuchtung der Lichtscheibe 32 über ihre gesamte Länge zu erreichen, nehmen die Abstände zwischen den einzelnen planparallelen Platten 40, 40' mit zunehmender Entfernung von der zugehörigen Leuchtdiode 36, 36' immer mehr ab. Dadurch wird erreicht, daß in unmittelbarer Nähe einer jeden Leuchtdiode 36, 36' pro Längeneinheit in Längsrichtung zwar weniger aber dafür hellere Anteile und in der Nähe der Mitte mehr Anteile mit geringerer Intensität ausgekoppelt werden, so daß sich ingesamt die erwünschte, gleichförmige Durchleuchtung der Lichtscheibe 32 ergibt.

Wie bei dem unter Bezugnahme auf die Figuren 1 und 2 geschilderten Ausführungsbeispiel wird auch hier die Reflektoranordnung 42 von einem gut wärmeleitenden Körper gebildet, der entweder aus einem auf der Reflexionsseite verchromten Blech oder einem mit einer entsprechenden Chromschicht bedampften Kunststoffbauteil besteht und an seinen beiden Enden rechtwinkelig angesetzte Schenkel 44, 44' aufweist, die mit der Trägerplatine 46, 46' der jeweiligen Leuchtdiode 34, 34' in engem, gut wärmeleitenden Kontakt stehen. Diese Trägerplatinen 46, 46' besitzen ihrerseits einen gut wärmeleitenden Kontakt mit der zugehörigen Leuchtdiode 34 beziehungsweise 34', sodaß die Reflektoranordnung gleichzeitig als Kühlkörper für die Leuchtdioden 34, 34' dient.

Zur Einsparung eines zusätzlichen Bauteils ist es besonder vorteilhaft, die Reflektoranordnung 42 in Form einer direkt auf die Innenseiten der Rückwand und der beiden Stirnwände des Gehäuses 30 aufgebrachte Verspiegelung auszubilden.

Bei Bremsleuchten, die senkrecht zur Zeichenebene eine größere Ausdehnung besitzen, können auf jeder der beiden Stirnseiten auch mehrere Leuchtdioden übereinander angeordnet sein. Auch ist es möglich, in der Zeichenebene auf jeder Stirnseite mehrere Leuchtdioden nebeneinander vorzusehen.

## Patentansprüche

1. Fahrzeugleuchte, insbesondere für ein Kraftfahrzeug, die folgende Bestandteile umfaßt:
ein Gehäuse mit einer durch eine langgestreckte Lichtscheibe (6; 32) verschlossenen Lichtaustrittsöffnung,
wenigstens eine im Gehäuse seitlich von der Lichtscheibe (6; 32) angeordnete Leuchtdiode (15; 34, 34'), deren Hauptabstrahlrichtung im wesentlichen parallel zur Längsrichtung der Lichtscheibe (6; 32) verläuft,
eine Lichtleitvorrichtung (8, 8'; 38, 38'), in die das von der wenigstens einen Leuchtdiode (15; 34, 34'), in Hauptabstrahlrichtung abgegebene Licht eingekoppelt und zumindest teilweise quer zu dieser Hauptabstrahlrichtung zur Lichtscheibe (6; 32) hin ausgekoppelt wird, und
eine Reflektoranordnung (20; 42), die sich zumindest auf der der Lichtscheibe (6; 32) gegenüberliegenden Seite der Lichtleitvorrichtung (8, 8'; 38, 38'), erstreckt und Licht, das von dieser in anderen Richtungen als zur Lichtscheibe (6; 32) hin ausgekoppelt wird, zur Lichtscheibe (6; 32) hin reflektiert,
**dadurch gekennzeichnet, daß** die Reflektoranordnung (20; 42), ein gut Wärme leitendes Material umfaßt und mit der wenigstens einen Leuchtdiode (15; 34, 34'), in gut Wärme leitender Verbindung steht, um für sie als Kühlkörper zu wirken.

2. Fahrzeugleuchte nach Anspruch 1, **dadurch gekennzeichnet, daß** die wenigstens eine Leuchtdiode (15; 34, 34'), in gut Wärme leitendem Kontakt auf einer Trägerplatine (13; 46, 46') montiert ist, die ihrerseits mit der Reflektoranordnung (20; 42), in gut Wärme leitender Berührung steht.

3. Fahrzeugleuchte nach Anspruch 1 oder 2, **dadurch gekennzeichnet, daß** die Reflektoranordnung (20; 42), ein hochglanzbedampftes Blech umfaßt.

4. Fahrzeugleuchte nach Anspruch 1 oder 2, **dadurch gekennzeichnet, daß** die Reflektoranordnung (20; 42), einen verchromten Kunststoffkörper umfaßt.

5. Fahrzeugleuchte nach Anspruch 1 oder 2, **dadurch gekennzeichnet, daß** die Reflektoranordnung von wenigstens einer auf ihrer Innenseite mit einer reflektierenden Schicht überzogenen Gehäusewand gebildet wird.

6. Fahrzeugleuchte nach einem der vorhergehenden Ansprüche, **dadurch gekennzeichnet, daß** sie als Seitenblinkleuchte (4) zum Einbau in das Gehäuse eines Rückblick-Außenspiegels (1) ausgebildet ist.

7. Fahrzeugleuchte nach einem der Ansprüche 1 bis 5, **dadurch gekennzeichnet, daß** sie als hochgesetzte Bremsleuchte ausgebildet ist.
